# EUROPÄISCHE PATENTSCHRIFT

(11) **EP 2 077 422 B1**
(45) Veröffentlichungstag und Bekanntmachung des Hinweises auf die Patenterteilung: **10.12.2014**
(21) Anmeldenummer: 09000082.9
(22) Anmeldetag: 07.01.2009
(51) Int. Cl.: F24D 19/00, B01J 49/00, B01J 47/04, C02F 1/00, C02F 103/02, C02F 1/42, C02F 1/66

(54) **Wasserbehandlungseinrichtung für eine Heizanlage**
Water treatment device for a heating installation
Dispositif de traitement de l'eau pour un dispositif de chauffage

(30) Priorität: 07.01.2008 DE 102008003327
(43) Veröffentlichungstag der Anmeldung: 08.07.2009
(73) Patentinhaber: Perma-Trade Wassertechnik GMBH, 71229 Leonberg (DE)
(72) Erfinder: Ende, Dietmar, 71287 Welssach (DE); Sautter, Michael, 71229 Leonberg (DE)
(74) Vertreter: Fleck, Hermann-Josef

(56) Entgegenhaltungen:
- DE-A1-102005 036 356
- US-A- 4 904 383
- BATTY B: "SOLVING BOILER/COOLING SYSTEM WATER PROBLEMS", HEATING, PIPING AND AIR CONDITIONING, REINHOLD PUBLISHING CO.INC. STAMFORD, US, Bd. 63, Nr. 1, 1. Januar 1991 (1991-01-01) , Seiten 125-129, XP000176388, ISSN: 0017-940X

## Beschreibung

Die Erfindung betrifft eine Wasserbehandlungseinrichtung für eine Heizanlage mit einer Entmineralisierungs- und Enthärtungseinheit, die einen wasserdurchströmten Behälter aufweist, in welchem lonentauscherelemente gehalten sind, die das durch den Behälter geleitete Wasser zumindest teilweise entmineralisieren und den pH-Wert des Wasser auf einen Wert im Bereich zwischen 8 und 11 überführen.

In den meisten Heizungsanlagen wird Wasser als Wärmeträgermedium verwendet. Durch Wechselwirkung des Wassers und der Wasserbestandteile mit den Heizungswerkstoffen können Schäden durch Korrosionsreaktionen und Belagsbildung entstehen.

Besonders durch die Steigerung der Wirkungsgrade von Heizungsanlagen wurden die Heizflächenbelastungen (kW/m²) und somit die Oberflächentemperaturen der Wärmeübertragungsflächen an der Wasserseite in den letzten Jahren zunehmend gesteigert.

Dies hat zur Folge, dass eine Belagsbildung im Bereich der Flamm- und Rauchgasrohre bei modernen Heizkesseln wesentlich stärkere Auswirkungen hat, als bei älteren Modellen. Je Millimeter Belagsstärke ergeben sich dabei Wirkungsgradverluste von bis zu 15%.

Aus diesen Gründen werden insbesondere großen Anlagen mit enthärtetem bzw. entmineralisiertem Wasser befüllt, um den gefürchteten Kesselstein zu verhindern. Um mögliche Korrosionsvorgänge weitgehend zu vermeiden, muss zusätzlich ein erhöhter pH-Wert eingestellt werden. Gegebenenfalls können auch chemische Inhibitoren zugesetzt werden.

Die US 4 904 383 A1 beschreibt eine Wasserbehandlungseinheit, bei der Ionentauscher elemente miteinander verschaltet sind. Dabei sind stark saure, stark basische oder schwach saure Ionentauschereinheiten miteinander kombiniert.

In zunehmendem Maße wird auch für Klein- und Kleinstanlagen empfohlen das Heizungssystem mit enthärtetem bzw. entmineralisiertem Wasser zu befüllen.

Aus der DE 10 2005 036 356 A1 ist eine Wasserbehandlungseinheit bekannt, mit der ein Heizungsinstallateur die Befüllung kleiner und mittlerer Heizungsanlagen mit Heizungswasser durchführen kann. Die bekannte Wasserbehandlungseinheit weist einen mit einen Zulauf und einen Ablauf versehenen Behälter auf, der zwei in strömungsleitender Verbindung stehende Kammern bildet. Der Zulauf und der Ablauf sind jeweils mit einer Anschlusskupplung ausgerüstet, mit welchen die Wasserbehandlungseinrichtung an eine Wasserzufuhr beziehungsweise an den Einfüllstutzen einer Heizanlage angeschlossen werden kann. In der einen Kammer ist eine Mischung aus schwach und stark sauren sowie basischen lonentauscherelementen gehalten, Mit diesen wird das durchfließende Wasser entmineralisiert und gleichzeitig ein pH-Wert zwischen 8,5 und 10,5 eingestellt. Das Wasser durchströmt anschließend die andere Kammer, in der ein Alkalisierungsmittel und/oder Puffersystem gehalten ist, das chemische Bestandteile in das Wasser abgibt. Anschließend strömt das Wasser durch den Ablauf aus und in die Heizungsanlage ein.

Die in der ersten Kammer befindliche Mischung aus schwach und stark sauren sowie basischen lonentauscherelementen kann nur eine begrenzte Menge von durchströmendem Wasser erttmineralisieren und den pH-Wert anpassen.

Der Grund dafür ist darin zu sehen, dass die lonentauscherelemente nur ein begrenztes Vermögen zur Enthärtung bzw. Entsalzung aufweisen und nach Durchströmen einer bestimmten Wassermenge gesättigt sind. Dieser Sättigungseffekt tritt bei Befüllung mit hartem Trinkwasser eher ein als bei Befüllung mit weichem Trinkwasser. Nach Sättigung der lonentauscherelemente wird die bekannte Wasserbehandlungseinheit entsorgt. Sollten größere Wassermengen in die Heizungsanlage eingefülft werden müssen, muss eine neue Wasserbehandlungseinheit in der Wasserzuleitung zum Einfüllstutzen der Heizanlage angeschlossen werden.

Da mit steigender Durchflussmenge das Vermögen der lonentauscherelemente zur Enthärtung bzw. Entsalzung des Einfüllwassers abnimmt, verschiebt sich auch der gewünschte pH-Wert des behandelten Wassers.

Es ist Aufgabe der Erfindung, eine Wasserbehandlungseinrichtung zu schaffen, mit der ein Heizungsinstallateur die Befüllung auch größerer Heizungsanlagen mit Heizungswasser einfach durchführen kann, wobei der gewünschte pH-Wert weitgehend unabhängig von der Durchflussmenge des Füllwassers stabil gehalten wird und gegebenenfalls gesättigte Elemente einfach entsorgt werden können.

Diese Aufgabe wird gelöst mit einer pH-Wert-Stabilisierungseinheit, die sich mit der Entmineralisierungs- und Enthärtungseinheit lösbar verbinden lässt. Die pH-Wert-Stabilisierungseinheit weist einen wasserdurchströmten Behälter auf, in welchem ein pH-Stabilisator als Puffersystem zur Stabilisierung des von den lonentauscherelementen geschaffenen pH-Wertes eingesetzt ist.

Die Wasserbehandlungseinrichtung kann vom Installateur beispielsweise an die normale Trinkwasserversorgung angeschlossen werden. Das Wasser durchfließt die Entmineralisierungs- und Enthärtungseinheit und wird dort mittels der lonentauscherelemente entmineralisiert. Auf diese Weise wird die Kesselsteinbildung verhindert oder zumindest stark verringert.

Gleichzeitig wird auch das Wasser in einen pH-Wert-Bereich überführt, der im Bereich zwischen 8 und 11 liegt. Der eingestellte pH-Wert verringert gleichzeitig die Korrosionsvorgänge an den metallischen Teilen des wasserführenden Systems.

Weiterhin durchfließt das Wasser die mit der Entmineralisierungs- und Enthärtungseinheit verbundene pH-Werf-Stabilisierungseinheit. Mit der pH-Wert-Stabilisierungseinheit wird sichergestellt, dass der pH-Wert des behandelten Wassers stabil gehalten wird, so dass das Wasser unempfindlich wird gegen die in der Regel sauer reagierenden Korrosionsprodukte aus dem Heizleitsystem, die den pH-Wert verschieben würde.

Die Wasserbehandlungseinrichtung kann vom Installateur einfach gehandhabt werden und erfordert keine weiteren Fachkenntnisse. Vorteilhafter Weise sind sowohl die Entmineralisierungs- und Enthärtungseinheit als auch die pH-Wert-Stabilisierungseinheit als Einwegpatrone, ausgeführt, die nach dem Befüllvorgang vom Installateur entsorgt werden können. Dabei kann es bei der Entmineralisierungs- und Enthärtungseinheit unter Umständen zu einer schnelleren Sättigung kommen, als dies bei der pH-Wert-Stabilisierungseinheit der Fall ist. Dies hängt von der Härte des zu behandelnden Wassers ab. Je nach Bedarf lässt sich auf einfache Weise auch nur entweder die Entmineralisierungs- und Enthärtungseinheit oder aber die pH-Wert-Stabilisierungseinheit einzeln ersetzen, je nach dem welche Einheit schneller gesättigt ist.

Um die Funktionalität der pH-Wert-Stabilisierungseinheit sicherzustellen, ohne dass die lonentauscherelemente der Entmineralisierungs- und Enthärtungseinheit durch ihn beeinflusst werden, kann es erfindungsgemäß vorgesehen sein, dass die pH-Wert-Stabilisierungseinheit in Strömungsrichtung hinter der Entmineralisierungs- und Enthärtungseinheit angeordnet ist.

Bevorzugter Weise kann es vorgesehen sein, dass der pH-Stabilisator in körniger oder pulvriger Form vorliegt und in einer Aufnahmeeinheit mit wasserdurchlässigen Wandungen, insbesondere bestehend aus einem Vlies- oder Gazewerkstoff bevorratet ist, wobei die Porosität der Wandung kleiner als der Korndurchmesser der Stabilisatorteilchen ist. Die Aufnahmeeinheit verhindert zuverlässig eine Vermischung von pH-Stabilisator und lonentauscherelementen. Als Aufnahmeeinheit kann beispielsweise ein Gewebe-, Vlies- oder Gazesäckchen zum Einsatz kommen. Dieses ist einfach herstell- und handhabbar.

Dabei kann der pH-Stabilisator ein Carbonat-Hydrogencarbonat-System, vorzugsweise ein Natriumcarbonat-Natriumhydrogen-carbonat-System sein. Dieses pH-Stabilisator-System kann kostengünstig bezogen werden und eignet sich besonders für die vorliegende Anwendung.

Gemäß einer besonders einfach und kostengünstig herzustellenden Ausführungsform kann der Behälter der Entmineralisierungs- und Enthärtungseinheit einen zylinderförmigen Rohrabschnitt aufweisen, dessen offene Enden jeweils durch eine Endkappe verschlossen ist. Dabei kann sowohl der Rohrabschnitt als auch die Endkappen aus einem Kunststoff hergestellt sein, wobei die Endkappen mit dem Rohrabschnitte verschweißt sein können. Bei der Herstellung der Entmineralisierungs- und Enthärtungseinheit kann auf einfache Weise das eine Ende des Rohrabschnitts mit einer Endkappe verschlossen, die lonentauscherelemente eingefüllt und anschließend das andere Ende mit einer weiteren Endkappe verschlossen werden.

Gemäß einer weiteren bevorzugten Ausführungsform kann der Behälter der pH-Wert-Stabilisierungseinheit aus zwei miteinander verbundenen, gewölbten Endkappen aufgebaut sein. Da die pH-Wert-Stabilisierungseinheit ein geringeres Volumen als die Entmineralisierungs- und Enthärtungseinheit aufweisen kann, ist ein derartiger Aufbau besonders einfach zu bewerkstelligen, indem zwei, aus Kunststoff bestehende Endkappen nach Befüllung mit dem pH-Stabitisator einfach miteinander verschweißt werden.

Bei der Herstellung der Entmineralisierungs- und Enthärtungseinheit kann auf einfache Weise der pH-Stabilisator in eine Endkappe eingefüllt und anschließend die weitere Endkappe aufgesetzt und verschweißt werden.

Besonders bevorzugter Weise können die Endkappen der Entmineralisierungs- und Enthärtungseinheit und die Endkappen der pH-Wert-Stabilisierungseinheft gleich ausgebildet sein. Dies reduziert die Vielfalt der verwendeten Bauteile, erleichtert die Herstellung und minimiert die Herstellungskosten.

Es ist auch denkbar, die Entmineralisierungs- und Enthärtungseinheit sowie die pH-Wert-Stabilisierungseinheit als einfach wiederbefüllbare Einheiten auszubilden. In diesem Fall sind die Endkappen nicht verschweißt sondern beispielsweise durch eine Schraubverbindung aufgebracht.

Der Installateur kann die Wasserbehandlungseinrichtung dann einfach an die Heizungsanlage und/oder die Wasserversorgung anschließen, wenn vorgesehen ist, dass der Behälter der Entmineralisierungs- und Enthärtungseinheit einen Zulauf und einen Ablauf aufweist und zusätzlich oder alternativ der Behälter der pH-Wert-Stabilisierungseinheit einen Zulauf und einen Ablauf aufweist, wobei der Zulauf und der Ablauf jeweils in den Endkappen ausgebildet sind und wobei der Ablauf und/oder der Zulauf ein Anschlussstück aufweisen.

Auf besonders einfache Weise können die Entmineralisierungs- und Enthärtungseinheit und die pH-Wert-Stabilisierungseinheit derart aufgebaut sein, dass der Ablauf der Entmineralisierungs- und Enthärtungseinheit direkt mit dem Zulauf der pH-Wert-Stabilisierungseinheit verbindbar, insbesondere verschraubbar ist.

Gemäß einer bevorzugten Ausführungsform kann das Anschlussstück des Ablaufs und/oder des Zulaufs der Entmineralisierungs- und Enthärtungseinheit jeweils ein Außengewinde aufweisen.

Das Anschlussstück des Zulaufs der pH-Wert-Stabilisierungseinheit kann ein Innengewinde und das Anschlussstück des Ablaufs der Entmineralisierungs- und Enthärtungseinheit ein Außengewinde aufweisen, wobei das Innengewinde des Zulaufs der pH-Wert-Stabilisierungseinheit auf das Außengewinde des Ablaufs der Entmineralisierungs- und Enthärtungseinheit aufschraubbar ist.

Der pH-Wert in der Entmineralisierungs- und Enthärtungseinheit kann mittels der lonentauscherelemente einstellbar sein. Auf diese Weise kann der konstruktive Aufwand deutlich vereinfacht werden. Dabei lässt sich vorteilhaft die pH-Wert-Einstellung dadurch erreichen, dass in der Kammer eine Mischung aus sauren und basischen lonentauscherelementen gehalten ist. Ober das Mischungsverhältnis kann der gewünschte pH-Wert eingestellt werden. Eine effektive Entmineralisierung des Wassers kann dadurch erreicht werden, dass ein Teil der lonentauscherelemente schwach und ein weiteren Teil stark sauer ist.

Der Überschuss an stark basischen lonentauscherelementen führt dazu, dass der pH-Wert in kurzer Zeit zum alkalischen Wert verschoben wird.

Eine bevorzugte Ausgestaltungsvariante ist dergestalt, dass zumindest ein Teil der lonentauscherelemente von ionentauschernarz-Teilen gebildet ist. Die lonentauscherharz-Teile sind kostengünstig, in der Regel in Granulatform, zu beziehen und sie verlieren ihre Eigenschaften auch dann nicht, wenn die Wasserbehandlungseinrichtung im rauen Baustellenalltag zum Einsatz kommt. Wenn ein Granulat Verwendung findet, dann hat es sich als vorteilhaft erwiesen, wenn vorgesehen ist, dass die lonentauscherelemente in Form eines Granulates mit einer mittleren Kerngröße im Bereich zwischen 0,5 und 1,4 mm vorliegen. Diese Teilchengröße ermöglicht eine zuverlässige Wasserbehandlung.

Um zu verhindern, dass lonentauscherelemente mit dem durchfließenden Wasser ausgeschwemmt werden, kann die Entmineralisierungs- und Enthärtungseinheit so ausgeführt sein, dass in Strömungsrichtung hinter den lonentauscherelementen ein Filter angeordnet ist.

Damit kann auch das Heizungsfüllwasser gefiltert und Schwebstoffe zurückgehalten werden. Beispielsweise hat sich ein Filter mit einer Maschenweite von ca. 50 µm als geeignet erwiesen.

Damit das Wasser in die Kammer gleichmäßig einströmt und/oder der Wasserstrom die lonentauscherelemente in der Entmineralisierungs- und Enthärtungseinheit nicht verdrängt, kann es vorgesehen sein, dass in Strömungsrichtung vor den lonentauscherelementen ein Strömungsverteiler in dem Behälter der Entmineralisierungs- und Enthärtungseinheit angeordnet ist.

Die Wasserbehandlung kann zusätzlich dadurch effektiviert werden, wenn vorgesehen ist, dass in dem Behälter der Entmineralisierungs- und Enthärtungseinheit oder in dem Behälter der pH-Wert-Stabilisierungseinheit oder in einem wasserdurchstömten Zusatzbehälter ein Korrosionsschutzmittel gehalten ist. Dabei kann es insbesondere vorgesehen sein, dass das Korrosionsschutzmittel einen chemischen Inhibitor, beispielsweise Molybdat oder ein Sauerstoffbindemittel aufweist.

Gemäß einer bevorzugten Erfindungsausgestaltung kann es vorgesehen sein, dass der pH-Wert-Stabilisator in körniger oder pulvriger Form vorliegt, und dass dem pH-Wert-Stabilisator ein Granulat, insbesondere ein Kunststoffgranulat, beigemischt ist. Das Granulat bildet ein Trennmittel, das verhindert, dass der pH-Wert-Stabilisator verblockt, beispielsweise wenn er feucht wird.

Denkbar ist auch, dass der pH-Wert-Stabilisator in zwei oder mehreren Aufnahmeeinheiten gehalten ist und dass die Aufnahmeeinheiten zumindest bereichsweise mittels Granulatschichten, insbesondere bestehend aus Kunststoffgranulat, voneinander getrennt sind. Auch dabei beugt das Granulat eine Verblockung vor. Als Granulat wird vorzugsweise Kunststoffgranulat mit einer mittleren Korngröße im Bereich zwischen 1 und 6 mm verwendet. Dieses ist kostengünstig beziehbar.

Die Erfindung wird nachfolgend anhand eines in den Zeichnungen dargestellten Ausführungsbeispiels näher erläutert.

### Es zeigen:

- Figur 1: eine Entmineralisierungs- und Enthärtungseinheit in schematischer Seitenansicht und im Schnitt;
- Figur 2: eine pH-Wert-Stabilisierungseinheit in schematischer Seitenansicht und im Schnitt; und
- Figur 3: in schematischer Seitenansicht eine Vllesserbehandlungseinrichtung, die aus der in Figur 1 gezeigten Entmineralisierungs- und Enthärtungseinheit besteht, die direkt mit der in Figur 2 gezeigten pH-Wert-Stabilisierungseinheit verbunden werden kann.

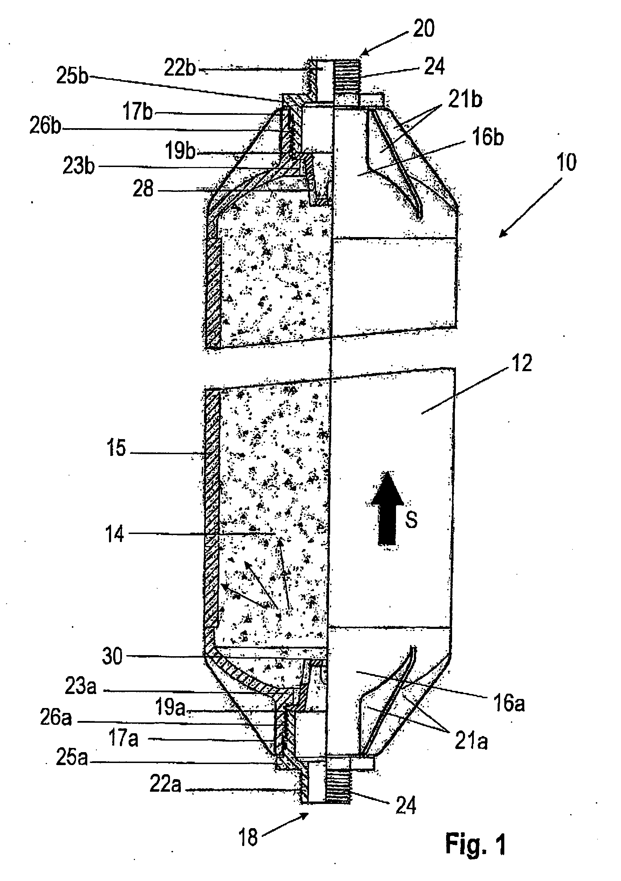

Die Figur 1 zeigt eine Entmineralisierungs- und Enthärtungseinheit 10 einer Wasserbehandlungseinrichtung für eine (nicht gezeigte) Heizanlage in schematischer Seitenansicht und im Schnitt. Die Entmineralisierungs- und Enthärtungseinheit 10 weist einen Behälter 12 aufweist, der im Wesentlichen aus einem zylinderförmigen Rohrabschnitt 15 aus einem Kunststoffmaterial, beispielsweise aus PE oder PP gebildet ist. Der Rohrabschnitt 15 ist an seinen längsseitigen, offenen Enden mittels konvex gewölbten Endkappen 16a und 16b aus Kunststoff verschlossen und beinhaltet lonentauscherelemente 14, die das durch den Behälter 12 geleitete Wasser zumindest teilweise entmineralisieren und den pH-Wert des Wasser auf einen Wert im Bereich zwischen 8 und 11 überführen. Wenn das wasserführende System Aluminiumwerkstoffe enthält, wird eine Wasserbehandlungseinrichtung eingesetzt, mittels der der pH-Wert auf einen Wert unter pH-Wert 9 eingestellt wird. Damit wird die Korrosion unter Aluminatbildung verhindert.

Die Endkappen 16a und 16b sind mit den Rohrabschnittsenden verschweißt und tragen Stutzen 17a und 17b, die jeweils mit einem Innengewinde 19a und 19b versehen sind. Mittels der Innengewindes 19a und 19b wird eine räumliche Verbindung zwischen der Umgebung und dem von dem Behälter 12 umschlossenen Innenraum geschaffen. Die Stutzen 17a und 17b sind vorzugsweise mit den Endkappen 16a und 16b einteilig in Form eines Spritzgussteiles aus Kunststoff verbunden und weisen zwischen den Stutzen 17a bzw. 17b und den Endkappen 16a bzw. 16b sich radial erstreckende Versteifungsstreben 21 a bzw. 21 b auf.

In das Innengewinde 19b des Stutzens 17b, der an der am Rohrabschnitt 15 stromabwärts (Pfeil S) angebrachten Endkappe 16b angeformt ist, kann ein Filterelement 28 eingelegt werden, das ein Ausschwemmen der lonentauscherelemente 14 verhindert. Hierzu weist der Stutzen 17b eine Schulter 23b auf, an der sich das Filterelement 28 abstützt. Auf der der Schulter 23b abgekehrten Seite wird das Filterelement 28, das als ein den Stutzenöffnungsquerschnitt überdeckendes Sieb ausgebildet ist mit einem Einschraubeinsatz eines Anschlussstücks 22b fixiert.

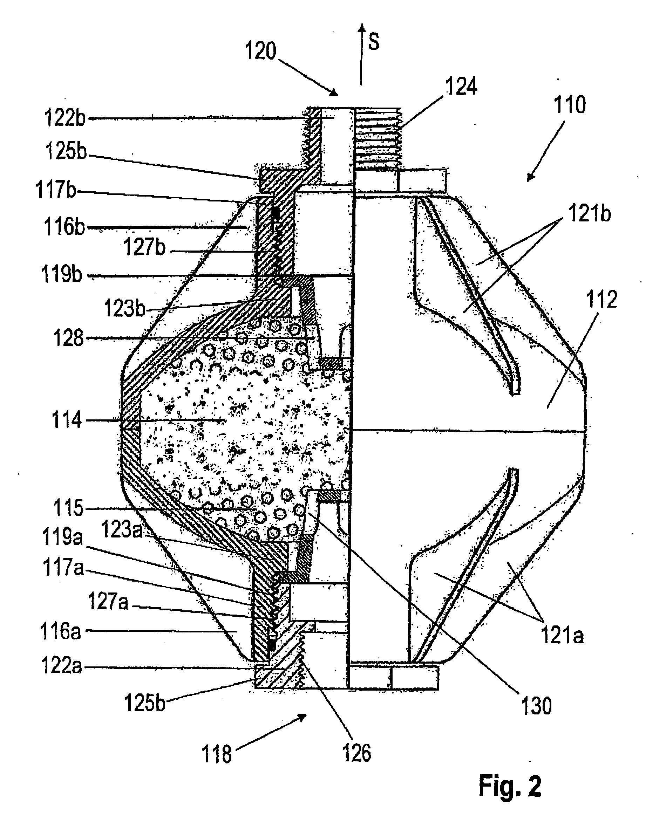

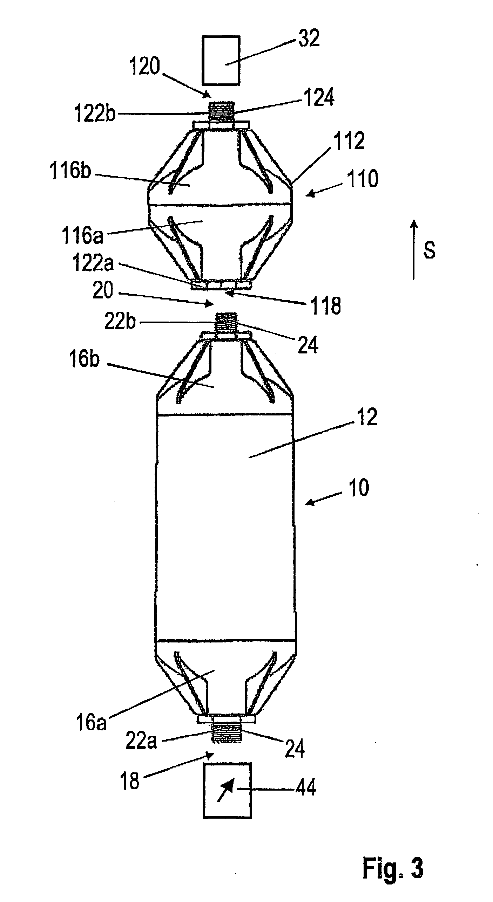

Der Einschraubeinsatz des Anschlussstücks 22b ist mit einem Außengewinde 26b in das Innengewinde 19b eingeschraubt. Die Einsschraubbewegung wird mittels eines Flansches 25b begrenzt. Dieser liegt in der Einschraubstellung stirnseitig am Stutzen 17b an. Zur Abdichtung des Einschraubeinsatzes des Anschlussstücks 22b gegenüber dem Stutzen 17b kann eine (nicht gezeigt) O-Ring-Dichtung vorgesehen sein. An den das Außengewinde 26b bildenden Einschraubeinsatz schließt sich in Strömungsrichtung S ein mit einem Außengewinde 24 versehener Rohrabschnitt des Anschlussstücks 22b an, das den Ablauf 20 bildet. An den mit dem Außengewinde 24 versehenen Rohrabschnitt des Anschlussstücks 22b kann ein Schlauchanschlussteil angeschlossen werden. Mit diesem kann die Wasserbehandlungseinrichtung schnell und einfach an den Einfüllstutzen einer Heizanlage angeschlossen werden. Alternativ kann an den mit dem Außengewinde 24 versehenen Rohrabschnitt des Anschlussstücks 22b auch direkt eine pH-Wert-Stabilisierungseinheit 110, wie sie anhand der Figuren 2 und 3 beschrieben ist, angeschlossen werden.

Der Stutzen 17b ist mit einer Durchgangsbohrung ausgestattet, um den Wasserabfluss in Strömungsrichtung S zu ermöglichen. Der Flansch 25b, der Rohrabschnitt des Anschlussstücks 22b und der das Außengewinde 26b tragende Abschnitt sind mit dem Anschlussstück 22b einteilig als Kunststoffteil ausgebildet. Der Flansch 25b kann eine Werkzeugaufnahme aufweisen, die ein Einschraubwerkzeug aufnimmt.

In das Innengewinde 19a des Stutzens 17a, der an der der Endkappe 16b entgegen gesetzten Rohrabschnittsende angeordneten Endkappe 16a angeformt ist, kann ein Strömungsverteiler 30 eingesetzt sein, der für eine möglichst gleichmäßige Durchströmung des vom Behälter 12 umschlossenen Kammervolumens sorgt, um die lonenaustauscherelemente 14 möglichst effektiv und gleichmäßig auszunutzen. Hierzu weist der Stutzen 17a eine Schulter 23a auf, an der sich der Strömungsverteiler 30 abstützt. Auf der der Schulter 23a abgekehrten Seite wird der Strömungsverteiler 30 mit einem Einschraubeinsatz eines Anschlussstücks 22a fixiert.

Der Einschraubeinsatz des Anschlussstücks 22a ist mit einem Außengewinde 26a in das Innengewinde 19a eingeschraubt. Die Einsschraubbewegung wird mittels eines Flansches 25a begrenzt. Dieser liegt in der Einschraubstellung stirnseitig am Stutzen 17a an. Zur Abdichtung des Einschraubeinsatzes des Anschlussstücks 22a gegenüber dem Stutzen 17a kann eine (nicht gezeigt) O-Ring-Dichtung vorgesehen sein. An den das Außengewinde 26a bildenden Einschraubeinsatz schließt sich in Strömungsrichtung S ein mit einem Außengewinde 24 versehener Rohrabschnitt des Anschlussstücks 22a an, das den Zulauf 18 bildet. An den mit dem Außengewinde 24 versehenen Rohrabschnitt des Anschlussstücks 22b kann ein Schlauchanschlussteil angeschlossen werden. Mit diesem kann die Wasserbehandlungseinrichtung schnell und einfach an eine Wasserzufuhr angeschlossen werden.

Der Stutzen 17a ist mit einer Durchgangsbohrung ausgestattet, um den Wasserzufluss in Strömungsrichtung S zu ermöglichen. Der Flansch 25a, der Rohrabschnitt des Anschlussstücks 22a und der das Außengewinde 26a tragende Abschnitt sind mit dem Anschlussstück 22a einteilig als Kunststoffteil ausgebildet. Der Flansch 25a kann eine Werkzeugaufnahme aufweisen, die ein Einschraubwerkzeug aufnimmt.

Der Behälter 12 umschließt eine Kammer in der eine Mischung, bestehend aus sauren und basischen lonentauscherelementen 14 als lonentauscherharz-Teilen in Granulatform mit einer mittleren Korngröße im Bereich zwischen 0,5 und 1,4 mm untergebracht ist. Dabei sind insbesondere auch starke basische und starke saure lonentauscherelemente 14 im Mischungsverhältnis im Bereich zwischen 1,3 und 1,6 verwendet. Der Überschuss an stark basischen lonentauscherelementen 14 führt zu einer schnellen Verschiebung des durchfließenden Wassers hin zum alkalischen pH-Wert. Zusätzlich können bevorzugt auch noch schwach basische und schwach saure lonentauscherelemente 14 für eine möglichst lange Lebensdauer der lonentauscherelement-Mischung eingesetzt sein.

Figur 2 zeigt eine pH-Werk-Stabilisierungseinheit 110 einer Wasserbehandlungseinrichtung für eine (nicht gezeigte) Heizanlage in schematischer Seitenansicht und im Schnitt.

Die pH-Wert-Stabilisierungseinheit 110 weist einen wasserdurchströmten Behälter 112 auf, der im Wesentlichen aus zwei miteinander verbundenen, konvex gewölbten Endkappen 116a und 116b aus einem Kunststoffmaterial, beispielsweise aus PE oder PP gebildet ist. In dem Behälter 112 ist ein pH-Stabilisator 114 als Puffersystem zur Stabilisierung des pH-Wertes eingesetzt ist.

Die Endkappen 116a und 116b sind miteinander verschweißt und tragen Stutzen 117a und 117b, die jeweils mit einem Innengewinde 119a und 119b versehen sind. Mittels der Innengewinde 119a und 119b wird eine räumliche Verbindung zwischen der Umgebung und dem von dem Behälter 112 umschlossenen Innenraum geschaffen. Die Stutzen 117a und 117b sind vorzugsweise mit den Endkappen 116a und 116b einteilig in Form eines Spritzgussteiles aus Kunststoff verbunden und weisen zwischen den Stutzen 117a bzw. 117b und den Endkappen 116a bzw. 116b sich radial erstreckende Versteifungsstreben 121a bzw. 121b auf.

In das Innengewinde 119b des Stutzens 117b, der an der stromabwärtigen, in der Figur 2 oberen Endkappe 116b angeformt ist, kann ein Filterelement 128 eingelegt werden, das ein Ausschwemmen von evtl. austretenden pH-Stabilisator 114 verhindert. Anstelle des Filterelements 128 kann alternativ ein (nicht gezeigtes) Rückhalteelement für den pH-Stabilisator 114 eingesetzt werden. Hierzu weist der Stutzen 117b eine Schulter 123b auf, an der sich das Filterelement 128 oder das Rückhalteelement abstützt. Auf der der Schulter 123b abgekehrten Seite wird das Filterelement 128 bzw. das Rückhalteelement, das als ein den Stutzenöffnungs-querschnitt überdeckendes Sieb ausgebildet ist, mit einem Einschraubeinsatz eines Anschlussstücks 122b fixiert.

Der Einschraubeinsatz des Anschlussstücks 122b ist mit einem Außengewinde 127b in das Innengewinde 119b eingeschraubt. Die Einsschraubbewegung wird mittels eines Flansches 125b begrenzt. Dieser liegt in der Einschraubstellung stirnseitig am Stutzen 117b an. Zur Abdichtung des Einschraubeinsatzes des Anschlussstücks 122b gegenüber dem Stutzen 117b kann eine (nicht gezeigt) O-Ring-Dichtung vorgesehen sein. An den das Außengewinde 127b bildenden Einschraubeinsatz schließt sich in Strömungsrichtung S ein mit einem Außengewinde 124 versehener Rohrabschnitt des Anschlussstücks 122b an, das den Ablauf 120 bildet. An den mit dem Außengewinde 124 versehenen Rohrabschnitt des Anschlussstücks 122b kann ein Schlauchänschlussteil angeschlossen werden. Mit diesem kann die Wasserbehandlungseinrichtung schnell und einfach an den Einfüllstutzen einer Heizanlage angeschlossen werden.

Der Stutzen 117b ist mit einer Durchgangsbohrung ausgestattet, um den Wasserabfluss in Strömungsrichtung S zu ermöglichen. Der Flansch 125b, der Rohrabschnitt des Anschlussstücks 122b und der das Außengewinde 127b tragende Abschnitt sind mit dem Anschlussstück 122b einteilig als Kunststoffteil ausgebildet. Der Flansch 125b kann eine Werkzeugaufnahme aufweisen, die ein Einschraubwerkzeug aufnimmt.

In das Innengewinde 119a des Stutzens 117a, der an der der Endkappe 116b entgegen gesetzten Rohrabschnittsende angeordneten Endkappe 116a angeformt ist, kann ein Strömungsverteiler 130 eingesetzt sein, der für eine möglichst gleichmäßige Durchströmung des vom Behälter 112 umschlossenen Kammervolumens sorgt, um den pH-Stabilisator 114 möglichst effektiv und gleichmäßig auszunutzen. Hierzu weist der Stutzen 117a eine Schulter 123a auf, an der sich der Strömungsverteiler 130 abstützt. Auf der der Schulter 123a abgekehrten Seite wird der Strömungsverteiler 130 mit einem Einschraubeinsatz eines Anschlussstücks 122a fixiert.

Der Einschraubeinsatz des Anschlussstücks 122a ist mit einem Außengewinde 127a in das Innengewinde 119a eingeschraubt. Die Einsschraubbewegung wird mittels eines Flansches 125a begrenzt. Dieser liegt in der Einschraubstellung stirnseitig am Stutzen 117a an, Zur Abdichtung des Einschraubeinsatzes des Anschlussstücks 122a gegenüber dem Stutzen 117a kann eine (nicht gezeigt) O-Ring-Dichtung vorgesehen sein. Der den das Außengewinde 127a bildenden Einschraubeinsatz nimmt ein in Strömungsrichtung S im Anschlussstück 122a ausgebildetes, mit einem Innengewinde 126 versehenes Rohrstück auf, das den Zulauf 118 bildet. An den mit dem Innengewinde 126 versehenen Rohrabschnitt des Anschlussstücks 122a kann direkt eine Entmineralisierungs- und Enthärtungseinheit 10, wie sie anhand der Figuren 1 und 3 beschrieben ist, angeschlossen werden.

Der Stutzen 117a ist mit einer Durchgangsbohrung ausgestattet, um den Wasserzufluss in Strömungsrichtung S zu ermöglichen. Der Flansch 125a, der Rohrabschnitt des Anschlussstücks 122a und der das Außengewinde 127a tragende Abschnitt sind mit dem Anschlussstück 122a einteilig als Kunststoffteil ausgebildet. Der Flansch 125a kann eine Werkzeugaufnahme aufweisen, die ein Einschraubwerkzeug aufnimmt.

Der Behälter 112 umschließt eine Kammer in der eine Aufnahmeeinheit 115 mit wasserdurchlässigen Wandungen, insbesondere bestehend aus einem Vlies- oder Gazewerkstoff, angeordnet ist.

In der Aufnahmeeinheit 115 ist der pH-Stabilisator 114 bevorratet, der in körniger bzw. pulvriger Form als ein Carbonat-Hydrogencarbonat-System, vorzugsweise ein Natriumcarbonat-Natriumhydrogencarbonat-System vorliegt. Die Porosität der Wandung der Aufnahmeeinheit 115 ist kleiner als der Korndurchmesser der Stabilisatorteilchen, so dass ein Ausschwemmen des durchströmten der pH-Stabilisators 114 verhindert wird.

Die Figur 3 zeigt in schematischer Seitenansicht eine Wasserbehandlungseinrichtung, die aus der in Figur 1 gezeigten Entmineralisierungs- und Enthärtungseinheit 10 besteht, die direkt mit der in Figur 2 gezeigten pH-Wert-Stabilisierungseinheit 110 verbunden werden kann.

Die pH-Wert-Stabilisierungseinheit 110 ist in Strömungsrichtung (Pfeil S) hinter der Entmineralisierungs- und Enthärtungseinheit 10 angeordnet. Dabei lässt sich der Ablauf 20 der Entmineralisierungs- und Enthärtungseinheit 10 direkt mit dem Zulauf 118 der pH-Wert-Stabilisierungseinheit 110 verbinden.

Zu diesem Zweck weist das Anschlussstück 122a des Zulaufs 118 der pH-Wert-Stabilisierungseinheit 110 das Innengewinde 126 und das Anschlussstück 22b des Ablaufs 20 der Entmineralisierungs- und Enthärtungseinheit 10 das Außengewinde 24 auf, wie anhand der Figuren 1 und 2 beschrieben. Das Innengewinde 126 des Zulaufs 118 der pH-Wert-Stabilisierungseinheit 110 lässt sich auf das Außengewinde 24 des Ablaufs 20 der Entmineralisierungs- und Enthärtungseinheit 10 aufschrauben.

Wie die Figur 3 zeigt, kann am Zulauf 18 der Entmineralisierungs- und Enthärtungseinheit 10 ein Wassermengenmesser 34 angeschlossen werden. Dieser ermittelt die Durchflussmenge des Wassers und gibt dem Installateur so eine Information über den Verschleißzustand der Wasserbehandlungseinrichtung. Zusätzlich oder alternativ kann auch eine Messeinrichtung verwendet werden, die das behandelte Wasser ausgangsseitig misst. Beispielsweise kann anhand einer Stromleitfähigkeitsmessung auf die Funktionsfähigkeit der Wasserbehandlungseinrichtung rückgeschlossen werden.

Wie die Figur 3 weiter erkennen lässt, kann am Ablauf 120 der pH-Wert-Stabilisierungseinheit 110 in einem wasserdurchstömten Zusatzbehälter 32 ein Korrosionsschutzmittel gehalten ist. Das Korrosionsschutzmittel 14 gibt chemische Bestandteile in das Wasser ab. Das Korrosionsschutzmittel kann beispielsweise flüssig oder vorzugsweise in Tablettenform verwendet werden und kann einen Inhibitor, beispielsweise Molybdat oder ein Sauerstoffbindemittel aufweisen. Anschließend strömt das Wasser in die Heizungsanlage ein. Zusätzlich oder alternativ kann das Korrosionsschutzmittel auch in dem Behälter 12 der Entmineralisierungs- und Enthärtungseinheit 10 beispielsweise in einer von den lonentauscherelementen 14 getrennten,

durchströmten Kammer oder in dem Behälter 112 der pH-Vllert-Stabilisierungseinheit 110 in einer von dem pH-Stabilisator 114 getrennten, durchströmten Kammer bevorratet sein.

Die Endkappen 16a und 16b der Entmineralisierungs- und Enthärtungseinheit 10 und die Endkappen 116a und 116b der pH-Wert-Stabilisierungseinheit 110 sind sind zur Verringerung des Teileaufwandes baugleich ausgeführt. Ebenso sind die in die Stutzen 17a und 17b Entmineralisierungs- und Enthärtungseinheit 10 bzw. in den Stutzen 117b der pH-Wert-Stabilisierungseinheit 110 eingeschraubten Anschlussstücke 22a und 22b bzw. 122b baugleich.

## Patentansprüche

1. Wasserbehandlungseinrichtung für eine Heizanlage mit einer Entmineralisierungs- und Enthärtungseinheit (10), die einen wasserdurchströmten Behälter (12) aufweist, in welchem lonentauscherelemente (14) gehalten sind, die das durch den Behälter (12) geleitete Wasser zumindest teilweise entmineralisieren und den pH-Wert des Wasser auf einen Wert im Bereich zwischen 8 und 11 überführen,
**gekennzeichnet durch**
eine mit der Entmineralisierungs- und Enthärtungseinheit (10) lösbar verbindbare pH-Wert-Stabilisierungseinheit (110), die einen wasserdurchströmten Behälter (112) aufweist, in welchem ein pH-Stabilisator (114) als Puffersystem zur Stabilisierung des von den lonentauscherelementen (14) geschaffenen pH-Wertes eingesetzt ist.

2. Wasserbehandlungseinrichtung nach Anspruch 1,
**dadurch gekennzeichnet,**
**dass** die pH-Wert-Stabilisierungseinheit (110) in Strömungsrichtung (Pfeil S) hinter der Entmineralisierungs- und Enthärtungseinheit (10) angeordnet ist.

3. Wasserbehandiungseinrichtung nach Anspruch 1 oder 2,
**dadurch gekennzeichnet,**
**dass** der pH-Stabilisator (114) in körniger oder pulvriger Form vorliegt und in einer Aufnahmeeinheit (115) mit wasserdurchlässigen Wandungen, insbesondere bestehend aus einem Vlies- oder Gazewerkstoff bevorratet ist, wobei die Porosität der Wandung kleiner als der Korndurchmesser der Stabilisstortellchen ist.

4. Wasserbehandtungseinrichtung nach einem der Ansprüche 1 bis 3,
**dadurch gekennzeichnet,**
**dass** der pH-Stabilisator (114) ein Carbonat-Hydrogencarbonat-System, vorzugsweise ein Natrlumcarbonat-Natriumhydrogencarbonat-System ist.

5. Wasserbehandlungseinrichtung nach einem der Ansprüche 1 bis 4,
**dadurch gekennzeichnet,**
**dass** der Behälter (12) der Entmineralisierungs- und Enthärtungseinheit (10) einen zylinderförmigen Rohrabschnitt (15) aufweist, dessen offene Enden jeweils durch eine Endkappe (16a, 16b) verschlossen ist, oder
**dass** der Behälter (112) der pH-Wert-Stabilisierungseinheit (110) aus zwei, vorzugsweise identisch ausgebildeten miteinander verbundenen, gewölbten Endkappen (116a, 116b) ausgebaut ist.

6. Wasserbehandlungseinrichtung nach einem der Ansprüche 1 bis 5,
**dadurch gekennzeichnet,**
**dass** der Behälter (12) der Entmineralisierungs- und Enthärtungseinheit (10) einen Zulauf (18) und einen Ablauf (20) aufweist, die jeweils in den Endkappen (16a, 16b) ausgebildet sind, wobei der Ablauf (20) und/oder der Zulauf (18) ein Anschlussstück (22a, 22b) aufweisen und/oder dass der Behälter (112) der pH-Wert-Stabilisierungseinheit (1110) einen Zulauf (118) und einen Ablauf (120) aufweist, die jeweils in den Endkappen ausgebildet (116a, 116b) sind, wobei der Ablauf (1120) und/oder der Zulauf (118) ein Anschlussstück (122a, 122b) aufweise.

7. Wasserbehandlungseinrichtung nach einem der Ansprüche 1 bis 6,
**dadurch gekennzeichnet,**
**dass** der pH-Wert in der Entmineralisierungs- und Enthärtungseinheit (10) mittels der lonentauscherelemente (14) einstellbar ist.

8. Wasserbehandlungseinrichtung nach einem der Ansprüche 1 bis 7,
**dadurch gekennzeichnet,**
**dass** in dem Behälter (12) der Entmineralisierungs- und Enthärtungseinheit (10) eine Mischung aus sauren und basischen lonentauscherelementen (14) gehalten ist.

9. Wasserbehandlungseinrichtung nach einem der Ansprüche 1 bis 8,
**dadurch gekennzeichnet,**
**dass** ein Teil der lonentauscherelemente (14) schwach sauer und ein weiteren Teil stark sauer ist, oder
**dass** ein Teil der lonentauscherelemente (14) schwach basisch und ein weiterer Teil stark basisch ist.

10. Wasserbehandiungseinrichtung nach einem der Ansprüche 1 bis 9,
**dadurch gekennzeichnet,**
**dass** zumindest ein Teil der lonentauscherelemente (14) von Ionentauscherharz-Teilen gebildet ist.

11. Wasserbehandlungseinrichtung nach einem der Ansprüche 1 bis 10,
**dadurch gekennzeichnet,**
**dass** die lonentauscherelemente (14) in Form eines Granulates mit einer mittleren Korngröße im Bereich zwischen 0,5 und 1,4 mm vorliegen.

12. Wasserbehandlungseinrichtung nach einem der Ansprüche 1 bis 11,
**dadurch gekennzeichnet,**
**dass** in dem Behälter (12) der Entmineralisierungs- und Enthärtungseinheit (10) in Strömungsrichtung (Pfeil S) hinter den lonentauscherelementen (14) ein Filter (28) angeordnet ist und/oder
**dass** in dem Behälter (12) der Entmineralisierungs- und Enthärtungseinheit (10) in Strömungsrichtung (Pfeil S) vor den lonentauscherelementen (14) ein Strömungsverteiler (30) angeordnet ist.

13. Wasserbehandlungseinrichtung nach einem der Ansprüche 1 bis 12,
**dadurch gekennzeichnet, dass**
in dem Behälter (12) der Entmineralisierungs- und Enthärtungseinheit (10) oder in dem Behälter (112) der pH-Wert Stabilisierungseinheit (110) oder in einem wasserdurchstömten Zusatzbehälter (32) ein Korrosionsschutzmittel, das vorzugsweise einen chemischen Inhibitor, beispielsweise ein Molybdat oder Sauerstoffbindemittel aufweist, gehalten ist.

14. Wasserbehandlungseinrichtung nach einem der Ansprüche 1 bis 13,
**dadurch gekennzeichnet,**
**dass** der pH-Wert-Stabilisator (114) in körniger oder pulvriger Form vorliegt, und
**dass** dem pH-Wert-Stabilisator (114) ein Granulat, insbesondere ein Kunststoffgranulat, beigemischt ist.

15. Wasserbehandlungseinrichtung nach einem der Ansprüche 1 bis 14,
**dadurch gekennzeichnet,**
**dass** der pH-Wert-Stabilisator (114) in zwei oder mehreren Aufnahmeeinheiten (115) gehalten ist und
**dass** die Aufnahmeeinheiten (115) zumindest bereichsweise mittels Granulatschichten, insbesondere bestehend aus Kunststoffgranulat, voneinander getrennt sind.

## Claims

1. Water treatment device for a heating installation, with a demineralization and softening unit (10) which has a vessel (12), through which water flows and in which are held ion exchanger elements (14) which at least partially demineralize the water conducted through the vessel (12) and change the pH value of the water to a value in the range of between 8 and 11,
**characterized by**
a pH-value stabilization unit (110) which is releasably connectable to the demineralization and softening unit (10) and has a vessel (112) through which water flows and in which a pH stabilizer (114) is used as a buffer system for stabilizing the pH value provided by the ion exchanger elements (14).

2. Water treatment device according to Claim 1,
**characterized**
**in that** the pH-value stabilization unit (110) is arranged downstream of the demineralization and softening unit (10) in the flow direction (arrow S).

3. Water treatment device according to Claim 1 or 2,
**characterized**
**in that** the pH stabilizer (114) is present in granular or powdery form and is stored in a reception unit (115) having water-permeable walls consisting, in particular, of a non-woven or gauze material, the porosity of the wall being lower than the grain diameter of the stabilizer particles.

4. Water treatment device according to one of Claims 1 to 3,
**characterized**
**in that** the pH stabilizer (114) is a carbonate/hydrocarbonate system, preferably a sodium carbonate/sodium hydrocarbonate system.

5. Water treatment device according to one of Claims 1 to 4,
**characterized**
**in that** the vessel (12) of the demineralization and softening unit (10) has a cylindrical tubular segment (15), the open ends of which are closed in each case by means of an end cap (16a, 16b), or
**in that** the vessel (112) of the pH-value stabilization unit (110) is constructed from two, preferably identically formed, domed end caps (116a, 116b) connected to one another.

6. Water treatment device according to one of Claims 1 to 5,
**characterized**
**in that** the vessel (12) of the demineralization and softening unit (10) has an inflow (18) and an outflow (20) which are formed in each case in the end caps (16a, 16b), the outflow (20) and/or the inflow (18) having a connection piece (22a, 22b), and/or
**in that** the vessel (112) of the pH-value stabilization unit (110) has an inflow (118) and an outflow (120) which are formed in each case in the end caps (116a, 116b), the outflow (120) and/or the inflow (118) having a connection piece (122a, 122b).

7. Water treatment device according to one of Claims 1 to 6,
**characterized**
**in that** the pH value in the demineralization and softening unit (10) can be set by means of the ion exchanger elements (14).

8. Water treatment device according to one of Claims 1 to 7,
**characterized**
**in that** a mixture of acid and basic ion exchanger elements (14) is held in the vessel (12) of the demineralization and softening unit (10).

9. Water treatment device according to one of Claims 1 to 8,
**characterized**
**in that** some of the ion exchanger elements (14) are weakly acid and others are strongly acid, or
**in that** some of the ion exchanger elements (14) are weakly basic and others are strongly basic.

10. Water treatment device according to one of Claims 1 to 9,
**characterized**
**in that** at least some of the ion exchanger elements (14) are formed by ion exchanger resin particles.

11. Water treatment device according to one of Claims 1 to 10,
**characterized**
**in that** the ion exchanger elements (14) are present in the form of a granulate with an average grain size in the range of between 0.5 and 1.4 mm.

12. Water treatment device according to one of Claims 1 to 11,
**characterized**
**in that** a filter (28) is arranged in the vessel (12) of the demineralization and softening unit (10) downstream of the ion exchanger elements (14) in the flow direction (arrow S), and/or in that a flow distributor (30) is arranged in the vessel (12) of the demineralization and softening unit (10) upstream of the ion exchanger elements (14) in the flow direction (arrow S).

13. Water treatment device according to one of Claims 1 to 12,
**characterized**
**in that** an anti-corrosive agent, which preferably has a chemical inhibitor, for example a molybdate or oxygen binding agent, is held in the vessel (12) of the demineralization and softening unit (10) or in the vessel (112) of the pH-value stabilization unit (110) or in an additional vessel (32) through which water flows.

14. Water treatment device according to one of Claims 1 to 13,
**characterized**
**in that** the pH-value stabilizer (114) is present in granular or powdery form, and
**in that** a granulate, in particular a plastic granulate, is admixed to the pH-value stabilizer (114).

15. Water treatment device according to one of Claims 1 to 14,
**characterized**
**in that** the pH-value stabilizer (114) is held in two or more reception units (115), and in that the reception units (115) are separated from one another, at least in regions, by means of granulate layers consisting, in particular, of plastic granulate.

## Revendications

1. Dispositif de traitement d'eau pour installation de chauffage, le dispositif présentant une unité (10) de déminéralisation et de détartrage dotée d'un récipient (12) traversé par l'eau et contenant des éléments (14) d'échange d'ions qui déminéralisent au moins en partie l'eau traversant le récipient (12) et amènent la valeur du pH de l'eau à une valeur comprise entre 8 et 11, **caractérisé par**
une unité (110) de stabilisation de la valeur du pH qui peut être raccordée de manière libérable à l'unité (10) de déminéralisation et de détartrage, l'unité de stabilisation de la valeur du pH présentant un récipient (112) traversé par l'eau et dans lequel un agent (114) de stabilisation du pH configuré comme système tampon stabilisant la valeur du pH formée par les éléments (14) d'échange d'ions est utilisé.

2. Dispositif de traitement d'eau selon la revendication 1, **caractérisé en ce que** l'unité (110) de stabilisation de la valeur du pH est disposée dans la direction d'écoulement (flèche S) en aval de l'unité (10) de déminéralisation et de détartrage.

3. Dispositif de traitement d'eau selon les revendications 1 ou 2, **caractérisé en ce que** le système (114) de stabilisation du pH présente la forme de grains ou de poudre et est conservé dans une unité de reprise (115) dotée de parois perméables à l'eau constituées en particulier d'un matériau de feutre ou de gaze, la porosité de la paroi étant inférieure au diamètre des grains de particules d'agent de stabilisation.

4. Dispositif de traitement d'eau selon l'une des revendications 1 à 3, **caractérisé en ce que** l'agent (114) de stabilisation du pH est un système carbonate-hydrogénocarbonate de préférence un système carbonate de sodium-hydrogénocarbonate de sodium.

5. Dispositif de traitement d'eau selon l'une des revendications 1 à 4, **caractérisé en ce que** le récipient (12) de l'unité (10) de déminéralisation et de détartrage présente une partie cylindrique tubulaire (15) dont les extrémités ouvertes sont toutes deux fermées par un capuchon d'extrémité (16a, 16b) ou **en ce que** le récipient (112) de l'unité (110) de stabilisation de la valeur du pH est constitué de deux capuchons d'extrémité (116a, 116b) bombés, reliés l'un à l'autre et de préférence de forme identique.

6. Dispositif de traitement d'eau selon l'une des revendications 1 à 5, **caractérisé en ce que** le récipient (12) de l'unité (10) de déminéralisation et de détartrage présente une amenée (18) et une évacuation (20) toutes deux formées dans les capuchons d'extrémité (16a, 16b), l'évacuation (20) et/ou l'amenée (18) présentant une pièce de raccordement (22a, 22b) et/ou **en ce que** le récipient (112) de l'unité (110) de stabilisation de la valeur du pH présente une amenée (118) et une évacuation (120) toutes deux formées (116a, 116b) dans les capuchons d'extrémité, l'évacuation (120) et/ou l'amenée (118) présentant une pièce de raccordement (122a, 122b).

7. Dispositif de traitement d'eau selon l'une des revendications 1 à 6, **caractérisé en ce que** la valeur du pH peut être ajustée dans l'unité (10)) de déminéralisation et de détartrage au moyen des éléments (14) d'échange d'ions.

8. Dispositif de traitement d'eau selon l'une des revendications 1 à 7, **caractérisé en ce qu'**un mélange d'éléments (14) d'échange d'ions acide et basique est repris dans le récipient (12) de l'unité (10) de déminéralisation et de détartrage.

9. Dispositif de traitement d'eau selon l'une des revendications 1 à 8, **caractérisé en ce qu'**une partie des éléments (14) d'échange d'ions est faiblement acide et une autre partie fortement acide ou **en ce qu'**une partie des éléments (14) d'échange d'ions est faiblement basique et une autre partie fortement basique.

10. Dispositif de traitement d'eau selon l'une des revendications 1 à 9, **caractérisé en ce qu'**au moins une partie des éléments (14) d'échange d'ions est formée de pièces de résine échangeuses d'ion.

11. Dispositif de traitement d'eau selon l'une des revendications 1 à 10, **caractérisé en ce que** les éléments (14) d'échange d'ions présentent la forme d'un granulé dont la taille moyenne des grains est comprise entre 0,5 et 1,4 mm.

12. Dispositif de traitement d'eau selon l'une des revendications 1 à 11, **caractérisé en ce qu'**un filtre (28) est disposé dans le récipient (12) de l'unité (10) de déminéralisation et de détartrage en aval des éléments (14) d'échange d'ions dans la direction d'écoulement (flèche S) et/ou **en ce qu'**un répartiteur d'écoulement (30) est disposé dans le récipient (12) de l'unité (10) de déminéralisation et de détartrage en amont des éléments (14) d'échange d'ions dans la direction d'écoulement (flèche S).

13. Dispositif de traitement d'eau selon l'une des revendications 1 à 12, **caractérisé en ce qu'**un agent de protection contre la corrosion qui présente de préférence un inhibiteur chimique, par exemple un molybdate ou un liant acide, est repris dans le récipient (12) de l'unité (10) de déminéralisation et de détartrage, dans le récipient (112) de l'unité (110) de stabilisation de la valeur du pH ou dans un récipient supplémentaire (32) traversé par l'eau.

14. Dispositif de traitement d'eau selon l'une des revendications 1 à 13, **caractérisé en ce que** l'agent (114) de stabilisation de la valeur du pH présente la forme de grains ou de poudre et **en ce que** l'agent (114) de stabilisation de la valeur du pH est mélangé à un granulé, en particulier un granulé de matière synthétique.

15. Dispositif de traitement d'eau selon l'une des revendications 1 à 14, **caractérisé en ce que** l'agent (114) de stabilisation de la valeur du pH est repris dans deux ou plusieurs unités de réception (115) et **en ce que** les unités de réception (115) sont séparées les unes des autres au moins par parties au moyen de couches de granulés constituées en particulier d'un granulé de matière synthétique.
